# EUROPÄISCHE PATENTANMELDUNG

(11) **EP 2 072 873 A2**
(43) Veröffentlichungstag der Anmeldung: **24.06.2009**
(21) Anmeldenummer: 08021242.6
(22) Anmeldetag: 06.12.2008
(51) Int. Cl.: F16L 3/10

(54) **Rohrhalterung, insbesondere für Rohrleitungen in Rauchgasabsorbern**

(30) Priorität: 21.12.2007 DE 102007062855
(71) Anmelder: AE & E Lentjes GmbH, 40880 Ratingen (DE)
(72) Erfinder: Ansperger, Rainer, 45968 Gladbeck (DE)
(74) Vertreter: Stenger, Watzke & Ring

(57) **Zusammenfassung**

Die vorliegende Erfindung betrifft eine Vorrichtung zur Befestigung eines Rohres (1) auf einem Haltebalken (2), insbesondere in Einrichtungen zur Rauchgasreinigung. Erfindungsgemäß ist vorgesehen, dass die zu befestigenden Rohre (1) auf einem Rohrsattel (3) gelagert werden und mittels Rohrschellen (5), welche in geeignete Halteplatten (4) eingreifen, auf dem Rohrsattel (3) fixiert werden und so mit dem Haltebalken (2) fest verbunden sind.

## Beschreibung

Die vorliegende Erfindung betrifft eine Vorrichtung zur Befestigung eines Rohres auf einem Haltebalken, insbesondere zur Befestigung von Rohrleitungen innerhalb von Absorbern in Rauchgasreinigungseinrichtungen.

Zur Befestigung von Rohrleitungen in Absorbern von Rauchgasreinigungseinrichtungen werden diese üblicherweise mittels halbkreisförmig ausgebildeter Rohrschellen an Haltebalken fixiert, wobei die Rohrschellen mittels geeigneter Gewindeabschnitte mit den die Rohrleitung tragenden Haltebalken verbunden werden. Hierzu weisen die Haltebalken entsprechende Durchbohrungen oder Aufnahmen für die Gewindeabschnitte der Rohrschellen auf, über welche die Rohrschellen dann mittels entsprechender Verschraubungen mit dem Halbebalken verbunden werden können.

Durch eine so ausgebildete Befestigung lassen sich Rohrleitungen sicher an Haltebalken befestigen. Im Bereich aggressiver und insbesondere korrosive Umgebungen müssen entsprechende Halterungen jedoch gegen einen korrosiven Angriff geschützt werden oder aus einem kocrosionsbeständigen Material gefertigt werden. Hierbei ist jedoch zu beachten, dass durch die Art der Befestigung über entsprechende Verschraubungen die eingesetzten Materialien jedoch eine hinreichende Zugbelastbarkeit aufweisen müssen, um eine sichere Befestigung der Rohrleitungen an entsprechenden Haltebalken zu gewährleisten. Daher werden vielfach Rohrhalterungen aus Edelstahl wie beispielsweise C276/2.4859 oder Hastelloy gefertigt. Diese Materialien sind jedoch in der Regel äußerst kostspielig und unterliegen vielfach hohen Preisschwankungen, so dass bei der Auslegung von Anlagen oftmals keine sichere Preiskalkulation für eine Angebotserstellung möglich ist.

Darüber hinaus müssen die eingesetzten Metallteile vor Ort, das heißt am Ort der Endmontage, in der Regel zusätzlich mit einer Gummierung überzogen werden. Hierbei müssen auch sämtliche Bohrungen vollständig gummiert werden und es muss darauf geachtet werden, dass die Gummierung durchgehend dicht ist, um einen hinreichenden Korrosionsschutz gegenüber den in Rauchgasreinigungsanlagen herrschenden Umgebungsbedingungen zu gewährleisten.

Hierdurch ist die Montage entsprechender Rohrbefestigungen in Rauchgasreinigungseinrichtungen in der Regel äußerst aufwendig und muss mit höchster Sorgfalt durchgeführt werden, um frühzeitige korrosive Schäden in den Rauchgasreinigungseinrichtungen zu vermeiden.

Dies berücksichtigend ist es die **Aufgabe** der vorliegenden Erfindung, eine Vorrichtung zur Befestigung eines Rohres auf einem Haltebalken bereitzustellen, welche sich kostengünstig fertigen lässt und einfach zu montieren ist.

**Gelöst** wird diese Aufgabe durch eine Vorrichtung zur Befestigung eines Rohres auf einem Haltebalken, wobei die Vorrichtung einen Rohrsattel, eine Halteplatte sowie eine Rohrschelle aufweist, wobei die Halteplatte mit dem Haltebalken verbunden ist und der Rohrsattel seitliche Führungselemente aufweist, welche so ausgebildet sind, dass der Rohrsattel passgenau in die mit dem Haltebalken verbundene Halteplatte eingreift, wobei die Halteplatte über den Rohrsattel hinausragende Fixierungsbereiche aufweist, welche in Fixierungsnuten in der Rohrschelle zur Befestigung des Rohres eingreifen können und wobei die Rohrschelle im Befestigungszustand sowohl das Rohr als auch den Rohrsattel passgenau umfasst und mit dem Rohrsattel über Fixierungsmittel fest verbindbar ist.

Hierbei kann als Fixierungsmittel zur Verbindung der Rohrschelle mit dem Rohrsattel ein Sicherungsstift dienen, welcher über eine Sicherungsstiftaufnahme in der Rohrschelle in den Rohrsattel einschiebbar ist.

Alternativ kann es erfindungsgemäß vorgesehen sein, dass als Fixierungsmittel zur Verbindung der Rohrschelle mit dem Rohrsattel eine Schweißnaht zwischen Rohrschelle und Rohrsattel dient, welche die Rohrschelle mit dem Rohrsattel im Befestigungszustand verbindet.

Bei der erfindungsgemäßen Ausgestaltung einer Rohrbefestigung können der Rohrsattel und die Rohrschelle aus einem Kunststoffmaterial wie beispielsweise Polypropylen oder einem glasfaserverstärkten Kunststoff (GFK) gefertigt werden, da die entsprechenden Elemente nur geringen Zugbelastungen ausgesetzt werden und so eine sichere und dauerhafte Fixierung des Rohres auf dem Haltebalken gewährleisten können. In einer weiteren Ausgestaltung kann es vorgesehen sein, dass sowohl der Rohrsattel als auch die Rohrschelle einen Stahlkern aufweisen, welcher mit entsprechendem Kunststoffmaterial zur Ausbildung eines Rohrsattels oder einer Rohrschelle ummantelt ist. Solche Elemente lassen sich in einfacher Weise mittels moderner Kunststoffspritzgusstechniken fertigen.

Die erfindungsgemäß vorgesehene Halteplatte (4) kann mit dem Haltebalken (2) mittels einer Schweißnaht verbunden sein. Die entsprechend verbundenen Halteplatten (4) und Haltebalken (2) können anschließend in einfacher Weise durch Aufbringen entsprechender Korrosionsschutzmittel wie beispielsweise Gummierungen vor korrosiven Angriffen geschützt werden. Durch diese Ausgestaltung werden Durchbohrungen von Haltebalken oder Trägerelementen vermieden, welche sich aufgrund der Durchbohrungen deutlich schwieriger gummieren lassen beziehungsweise bei welchen es häufig zu Beschädigungen des Korrosionsschutzes im Bereich der Durchbohrungen im Zuge der Montage kommt.

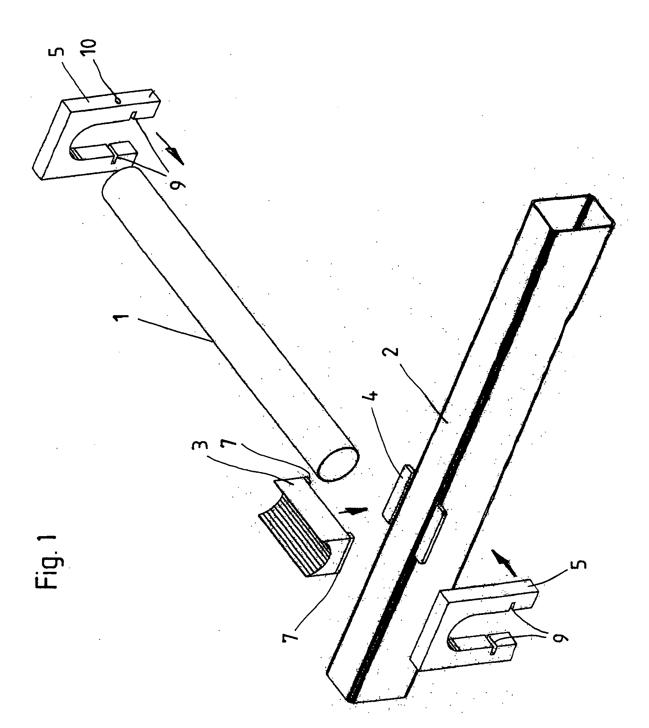

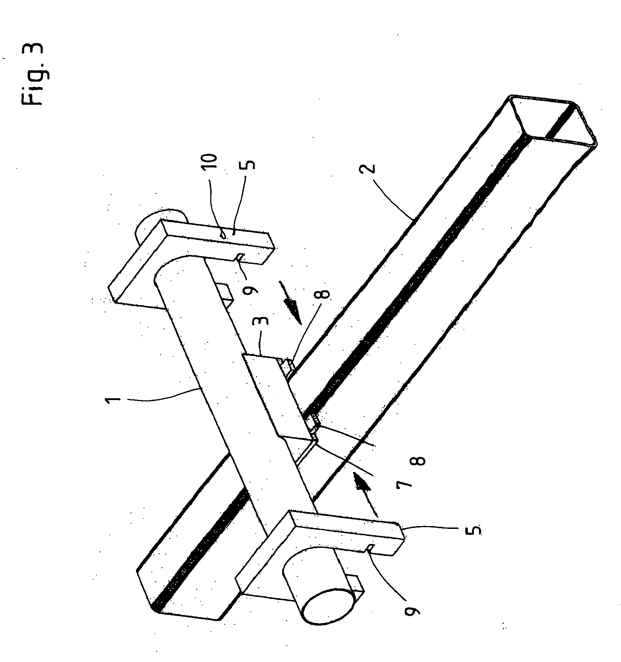

Die Figuren 1 bis 4 verdeutlichen das Befestigungsprinzip von Rohrleitungen mittels der erfindungsgemäßen Vorrichtung zur Befestigung.
- **F**ig. 1: zeigt eine Explosionszeichnung der erfindungsgemäßen Befestigungsvorrichtung.
- **F**ig. 2: zeigt die ersten Montageschritte zur Befestigung eines Rohres mittels der erfindungsgemäßen Befestigungsvorrichtung.
- **F**ig. 3: zeigt den Verlauf der weiteren Montage der erfindungsgemäßen Befestigungsvorrichtung.
- **F**ig. 4: zeigt ein mittels der erfindungsgemäßen Befestigungsvorrichtung auf einem Haltebalken befestigtes Rohr.

In Fig. 1 sind die Halteplatten 4 an dem Haltebalken 2 mittels einer Schweißnaht befestigt worden. Über den Haltebalken 2 sowie die Halteplatten 4 wurde zum Korrosionsschutz eine durchgehende Gummierung aufgetragen. Der Rohrsattel 3 weist in den Endbereichen der Längserstreckung Führungselemente 7 auf, welche einen passgenauen Aufsatz des Rohrsattels 3 auf den Haltebalken 2 und die Halteplatten 4 ermöglicht.

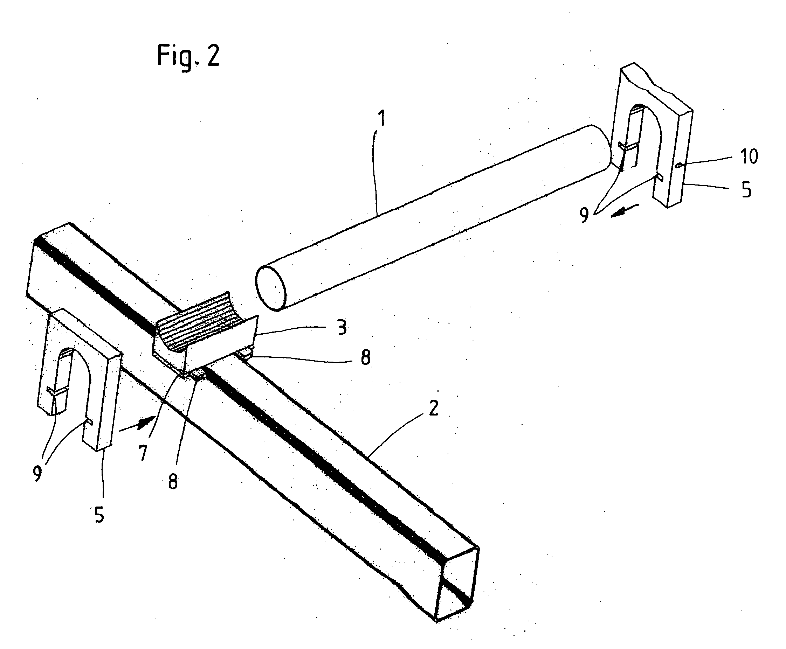

In Fig. 2 ist der Rohrsattel 3 auf den Haltebalken 2 und die Halteplatten 4 aufgesetzt worden. Die Halteplatten 4 sind erfindungsgemäß länger ausgebildet als die Breite des Rohrsattels 3, so dass die Halteplatten 4 über den Rohrsattel 3 hinausragen und Fixierungsbereiche 8 ausbilden.

Die Rohrschellen 5, welche mit den Fixierungsbereichen 8 der Halteplatten 4 übereinstimmende Fixierungsnuten 9 aufweisen, werden nun in einfacher Weise seitlich auf den Rohrsattel 3 über das Rohr 1 aufgeschoben, so dass die Fixierungsnuten 9 in die Fixierungsbereiche 8 der Halteplatten 4 eingreifen. Hierdurch wird das Rohr 1 in einfacher Weise auf dem Haltebalken 2 befestigt. In einer Ausgestaltung der Erfindung brauchen die Rohrschellen 5 nicht seitlich auf den Rohrsattel 3 und die Fixierungsbereiche 8 der Halteplatten 4 aufgeschoben werden, sondern die Rohrschellen 5 sind federelastisch ausgebildet und können durch leichtes Aufbiegen und anschließendes Zurückfedern in die Ursprungsform von oben auf den Rohrsattel 3 und die Halteplatten 4 aufgesteckt werden, wobei die Fixierungsnuten 9 beim Zurückfedern der Rohrschelle 5 in ihrer Ausgangsform in die Fixierungsbereiche 8 der Halteplatten 4 eingreifen. Hierzu können die Rohrschellen 5 in den Endbereichen keilförmig ausgebildet sein, so dass die für das Aufweiten der Rohrschelle 5 nötigen Biegekräfte über die keilförmigen Ausbildungen durch von oben auf die Rohrschelle 5 ausgeübten Druck aufgebracht werden können. Beim Erreichen der Führungsnuten 9 rutschen die Fixierungsbereiche 8 dann in die Fixierungsnuten 9.

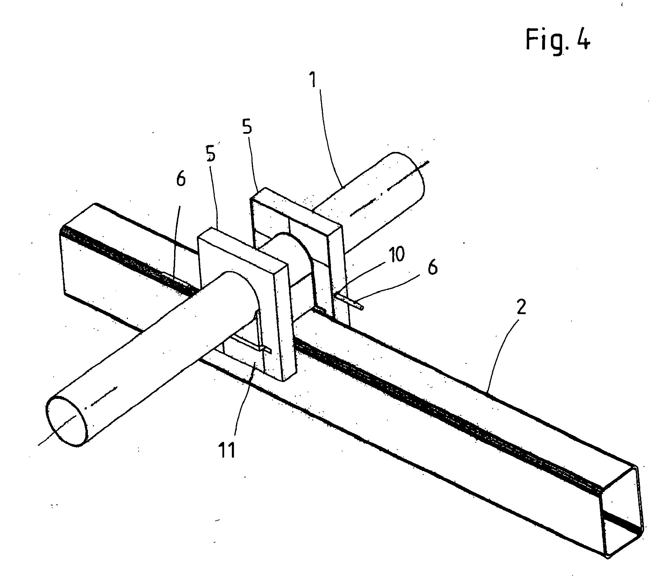

Wie in Fig. 4 gezeigt, können die Rohrschellen 5 zur dauerhaften Befestigung des Rohres 1 auf dem Haltebalken 2 mittels eines Sicherungsstiftes 6 mit dem Rohrsattel 3 verbunden werden, wodurch ein Ablösen oder Runterrutschen der Rohrschellen 5 von den Fixierungsbereichen 8 der Halteplatten 4 vermieden wird. Hierzu sind erfindungsgemäß in den Rohrschellen 5 Sicherungsstiftaufnahmen 10 vorgesehen, durch welche ein Sicherungsstift 6 in den Rohrsattel 3 eingeschoben werden kann. Der Sicherungsstift 6 kann hierbei aus Edelstahl gefertigt sein, oder beispielsweise auch in Form einer Kunststoffschraube ausgebildet sein, welche durch die Sicherungsstiftaufnahme 10 in den Rohrsattel 3 eingeschraubt wird. Die erfindungsgemäße Ausgestaltung der Rohrbefestigung ermöglicht diese einfache Fixierungsweise, da der Sicherungsstift 6 keinerlei Zugbelastungen ausgesetzt ist und daher an diesen keine entsprechenden Materialanforderungen gestellt werden müssen. Die Ausbildung des Sicherungsstiftes 6 in Form einer Kunststoffschraube gewährleistet darüber hinaus eine entsprechende Korrosionsbeständigkeit.

In einer weiteren Ausgestaltung der Erfindung können die Rohrschellen 5 zur Fixierung mit dem Rohrsattel 3 verschweißt werden. In der erfindungsgemäßen Ausgestaltung des Rohrsattels 3 und der Rohrschellen 5 aus Kunststoff können diese mittels Kunststoffverschweißens miteinander sicher verbunden werden.

Erfindungsgemäß kann darüber hinaus die Montage eines Bodenabschlusses 11 unterhalb der Halteplatte 4 und zwischen den Schenkeln der Rohrschelle 5 vorgesehen sein, um eine zusätzlich Fixierung oder eine Erhöhung der mechanischen Stabilität zu gewährleisten. Der Bodenverschluss 11 kann hierbei erfindungsgemäß wie der Rohrsattel 3 mittels geeigneter Sicherungsstifte 6 befestigt sein oder mit der Rohrschelle 5 verschweißt sein.

### Bezugszeichenliste:

- 1: Rohr
- 2: Haltebalken
- 3: Rohrsattel
- 4: Halteplatte
- 5: Rohrschelle
- 6: Sicherungsstift
- 7: Führungselement
- 8: Fixierungsbereich
- 9: Fixierungsnut
- 10: Sicherungsstiftaufnahme
- 11: Bodenverschluss

## Patentansprüche

1. Vorrichtung zur Befestigung eines Rohres (1) auf einem Haltebalken (2), aufweisend einen Rohrsattel (3), eine Halteplatte (4), sowie eine Rohrschelle (5), wobei die Halteplatte (4) mit dem Haltebalken (2) verbunden ist und der Rohrsattel (3) seitliche Führungselemente (7) aufweist, welche so ausgebildet sind, dass der Rohrsattel (3) passgenau in die mit dem Haltebalken (2) verbundene Halteplatte (4) eingreift, wobei die Halteplatte (4) über den Rohrsattel (3) hinausragende Fixierungsbereiche (8) aufweist, welche in Fixierungsnuten (9) in der Rohrschelle (5) zur Befestigung des Rohres (1) eingreifen können und wobei die Rohrschelle (5) im Befestigungszustand sowohl das Rohr (1) als auch den Rohrsattel (3) passgenau umfasst und mit dem Rohrsattel über Fixierungsmittel fest verbindbar ist.

2. Vorrichtung gemäß Anspruch 1, wobei als Fixierungsmittel zur Verbindung der Rohrschelle (5) mit dem Rohrsattel (3) ein Sicherungsstift (6) dient, welcher über eine Sicherungsstiftaufnahme (10) in der Rohrschelle (5) in den Rohrsattel (3) einschiebbar ist.

3. Vorrichtung gemäß Anspruch 1, wobei als Fixierungsmittel zur Verbindung der Rohrschelle (5) mit dem Rohrsattel (3) eine Schweißnaht zwischen Rohrschelle (5) und Rohrsattel (3) dient, mit welcher die Rohrschelle (5) mit dem Rohrsattel (3) im Befestigungszustand verbunden wird.

4. Vorrichtung nach einem der vorhergehenden Ansprüche, wobei der Rohrsattel (3) und die Rohrschelle (5) aus einem Kunststoffmaterial, vorzugsweise Polypropylen oder einem glasfaserverstärktem Kunststoff (GFK), gefertigt sind.

5. Vorrichtung nach einem der vorhergehenden Ansprüche, wobei die Halteplatte (4) an dem Haltebalken (2) mittels einer Schweißnaht befestigt.

6. Vorrichtung gemäß Anspruch 5, wobei über die Halteplatte (4) und den Haltebalken (5) ein durchgehender Korrosionsschutz ausgebildet ist.
